# EUROPÄISCHE PATENTANMELDUNG

(11) **EP 1 887 322 A1**
(43) Veröffentlichungstag der Anmeldung: **13.02.2008**
(21) Anmeldenummer: 06015898.7
(22) Anmeldetag: 31.07.2006
(51) Int. Cl.: G01D 5/20

(54) **Induktive Positions- oder Winkelmesseinrichtung**

(71) Anmelder: Cherry GmbH, 91275 Auerbach/Opf. (DE)
(72) Erfinder: Eissner, Markus, 92676 Eschenbach (DE); Schreiber, Michael, 91171 Greding (DE)
(74) Vertreter: Frohwitter, Bernhard

(57) **Zusammenfassung**

Die Erfindung betrifft eine induktive Positions- oder Winkelmesseinrichtung mit zwei, drei oder vier digitalen Oszillatoren, die jeweils entweder eine Messspule oder eine Referenzspule enthalten. Besonders günstig für eine Verwendung als Getriebesensor ist eine Spulenanordnung für drei Oszillatoren, die eine Messspule und zwei Referenzspulen umfasst. Wenn ein für Wirbelströme empfängliches, plattenförmiges Messelement den Messbereich durchläuft, so wird die planar angeordnete Messspule zunehmend überdeckt. Eine der Referenzspulen ist so angeordnet, dass sie von der Bewegungsbahn des Messelementes nicht tangiert wird, aber den gleichen Umgebungsbedingungen (Temperaturen) wie die Messspule ausgesetzt ist. Die andere Referenzspule ist so angeordnet, dass sie im gesamten Messbereich von dem Messelement überdeckt wird und deshalb im Betrieb auftretende Schwankungen der Abstandshöhe zwischen der planaren Spulenanordnung und dem Messelement kompensieren kann.

Die Pulsfrequenzen der digitalen Oszillatorsignale werden asynchron gezählt und in einer digitalen Auswerteschaltung paarweise subtrahiert. Der Betrieb der Auswerteschaltung wird mit Hilfe einer Systemfrequenz getaktet, die direkt oder mittels eines digitalen Teilers aus der Pulsfrequenz eines der Referenzoszillatoren abgeleitet ist.

## Beschreibung

Die Erfindung betrifft eine induktive Positions- oder Winkelmesseinrichtung mit zwei, drei oder vier digitalen Oszillatoren, die jeweils entweder eine Messspule oder eine Referenzspule enthalten. Die Mess- oder Referenzspulen bilden eine Spulenanordnung, in deren Nähe ein bewegliches Messelement eine bestimmte Position oder eine bestimmte Winkelstellung einnimmt. Das Messelement kann beispielsweise zu einem Getriebesensor gehören, der in einem Kraftfahrzeuggetriebe eingebaut ist. In diesem Anwendungsfall ist das Messelement mechanisch verbunden mit einem Gangwahl-Stellglied innerhalb des Getriebes. Insbesondere kann das Gangwahl-Stellglied eine Schaltschwinge eines Doppelkupplungsgetriebes sein. Das Messelement kann an eine geradlinige Bewegung des Stellglieds oder an die kreisbogenförmige Bewegung z.B. der Schaltschwinge angepasst sein. Im zweiten Fall ist das Messelement, das über eine dann kreisbogenförmige Spulenanordnung geführt wird, entsprechend der Bewegungsrichtung in sich gekrümmt. Die induktive Positionsmesseinrichtung ermöglicht eine Rückmeldung darüber, welcher Gang in einem Automatikgetriebe gerade eingelegt ist. Darüber hinaus erfasst sie zeitnah und positionsgenau den getriebeinternen Ablauf des Schaltvorgangs, beispielsweise die Bewegung der genannten Schaltschwinge zwischen den Positionen "Eingriff in einen Synchronring A", "Mitte" und "Eingriff in einen Synchronring B".

Die induktive Messeinrichtung arbeitet vorzugsweise nach dem Prinzip des Wirbelstromsensors. Es ist im Rahmen der Erfindung auch möglich, die Induktivitätsänderungen in der Messeinrichtung durch Messelemente aus weichmagnetischen Werkstoffen wie z.B. Ferrite zu erzielen. Im folgenden wird jedoch nicht eine Verstärkung des Magnetfelds, sondern eine Abschwächung des Magnetfelds als Beispiel betrachtet. Das Magnetfeld der Messspule erzeugt in einem elektrisch leitfähigen Messelement Wirbelströme, die auf die Spule zurückwirken. Unter anderem wird die Induktivität der Messspule von der räumlichen Lage des Messelementes relativ zur Spule beeinflusst. Diese veränderliche Induktivität bestimmt zusammen mit der Kapazität eines Kondensators die Eigenfrequenz eines entsprechenden Oszillators, der beispielsweise als Colpitts-Oszillator ausgebildet sein kann. Die Auswertung der Eigenfrequenz erlaubt die Positionsmessung (i) mit guter Ortsauflösung innerhalb eines Messbereichs von beispielsweise 24 mm und (ii) mit guter Zeitauflösung von beispielsweise 1 ms.

Die Schrift DE 42 37 879 A1 offenbart eine Auswerteschaltung für einen ähnlich ausgebildeten Induktivsensor. Zwei Messspulen sind als Differentialsensor geschaltet, d.h. die Induktivitäten der beiden Spulen verändern sich gegensinnig in Abhängigkeit von der erfassten Stellung eines Kerns. Jede Messspule wird zusammen mit zwei Kondensatoren als Oszillator betrieben, der durch einen Invertierverstärker zu einem digitalen Colpitts-Oszillator vervollständigt ist. Das Ausgangssignal dieses Oszillators kann in einer digitalen Auswerteschaltung unmittelbar weiter verarbeitet werden. Die Schwingungsdauer des Oszillators wird dadurch bestimmt, dass durch das Oszillatorsignal ein Zähler freigegeben und nach Ablauf von beispielsweise zwei Schwingungsperioden gestoppt wird. Der Zählerstand des Zählers erhöht sich synchron mit einer Taktfrequenz, die von einem gesonderten Oszillator geliefert wird und die wesentlich höher ist als die Frequenz des Sensoroszillators. Anschließend werden die Zählerstände der zwei gegensinnigen Sensoroszillatoren subtrahiert und als digitales Messergebnis ausgegeben.

Aus der Schrift DE 40 38 515 A1 ist eine weitere Einrichtung zur Längen- oder Winkelmessung bekannt. Sie wird beispielsweise in Kraftfahrzeugen dazu verwendet, das Karosserieniveau zu regulieren oder die Winkelposition der Kurbelwelle zu messen. Als Probleme der Messeinrichtung werden ein großer Temperaturbereich sowie sonstige negative Einflüsse von Umgebungsbedingungen namhaft gemacht. Eine Abtastspule ist jeweils Teil eines LC-Schwingkreises, der seinerseits durch einen geregelten Abtastoszillator getrieben wird. Oszillatorschaltung und Schwingkreis erzeugen als Analogschaltung eine Wechselspannung, deren Frequenz durch den Schwingkreis bestimmt, aber während der Messung nicht wesentlich verändert wird. Vielmehr werden mehrere Abtastoszillatoren nebeneinander verwendet, deren Schwingkreise in ihrer Amplitude durch Dämpfung bzw. Nichtdämpfung von mehreren parallelen Kodespuren her beeinflusst werden. Zur Eliminierung eines störenden Übersprechens zwischen den Abtastspulen werden die Schwingkreise auf etwas unterschiedliche Resonanzfrequenzen abgestimmt. Zur Bedämpfung jeweils einer Abtastspule wird jeweils eine in der Längeneinheit geeichte, abwechselnd aus metallisch leitenden und nicht leitenden Flächen bestehende, binäre Spur verwendet. Um in einem großen Temperaturbereich sichere Messergebnisse zu erhalten, ist ein zusätzlicher Referenzoszillator vorgesehen, der mit den Abtastoszillatoren im wesentlichen baugleich und räumlich so angeordnet ist, dass er den gleichen Umgebungsbedingungen ausgesetzt ist wie die Abtastoszillatoren. Der Referenzoszillator bleibt immer unbedämpft; außerdem wird er analog geregelt auf einen Betrieb mit konstanter Amplitude. Seine die Umwelteinflüsse reflektierende Regelgröße wird zur Amplitudensteuerung der eigentlichen Abtastoszillatoren und damit als Vergleichswert für die Spannungen der Abtastoszillatoren herangezogen.

Beim Einsatz induktiver Messeinrichtungen dieser oder ähnlicher Art in Getrieben treten fünf Probleme verstärkt und sich gegenseitig verstärkend auf, die über die bekannte Temperaturabhängigkeit hinausgehen. Zum einen ist innerhalb des Getriebes der Bauraum für eine Leiterplatte, auf der die Oszillatoren und die Auswerteschaltung zweckmäßigerweise aufgebaut sind, grundsätzlich beengt und auch aufgrund des induktiven Messprinzips begrenzt. Zweitens unterliegen die planar auf der Leiterplatte aufgebrachten Spulen und die übrigen Bauteile der Oszillator- und Auswerteschaltungen nicht nur der üblichen Temperaturdrift, sondern müssen in einem Temperaturbereich, der in dem Getriebe Betriebstemperaturen zwischen -40°C und +150°C annimmt, zuverlässig mit dem beweglichen Messelement zusammenarbeiten. Zusätzlich zu den hierdurch verursachten Wärmedehnungen beeinflussen drittens mechanische Toleranzen im Getriebe die funktionswichtige Abstandshöhe zwischen der planaren Messspule einerseits und dem plattenförmigen, in möglichst konstantem Abstand über die Messspule zu führenden Messelement andererseits. Da die induktive Sensorik zudem eine Mehrzahl von Übergangspositionen längs des Bewegungspfades des Gangschalt-Stellglieds oder eine Mehrzahl von Winkelstellungen auflösen soll, ist viertens eine lineare Kennlinie des Sensors in einem relativ großen Messbereich erforderlich. Schliesslich soll fünftens ein Metallschlamm, der sich im Ölsumpf eines Getriebes durch Abrieb ansammelt, die Messung nicht beeinflussen (wie es zum Beispiel bei einem Hall-Sensor der Fall ist, dessen Permanentmagnet mit zunehmender Betriebsdauer von Eisenabrieb umlagert wird).

Die Aufgabe der Erfindung besteht deshalb darin, eine platzsparende Positions- oder Winkelmesseinrichtung anzugeben, die in einem großen Temperaturbereich verwendbar ist und die gegen mechanische Toleranzen sowie gegen Abrieb des Messobjekts unempfindlich ist und die einen möglichst hohen Positions- oder Winkelmessbereich aufweist, in dem die Kennlinie linear ist.

Diese Aufgabe wird durch eine induktive Positions- oder Winkelmesseinrichtung mit den Merkmalen des Anspruchs 1 oder mit den Merkmalen des Anspruchs 12 oder mit den Merkmalen des Anspruchs 23 gelöst. Die Messeinrichtung nach dem Anspruch 1 kombiniert ihre Merkmale wie folgt zu einer zweckmäßigen Gesamtlösung.

Wie in dem Stand der Technik gemäß den Schriften '879 und '515 werden als Oszillatoren LC-Schwingkreise verwendet. Anders als in der Schrift '879 teilen sich die Oszillatoren nicht die gleichen Kondensatoren im Zeitmultiplex, sondern arbeiten parallel, jeder für sich und ohne Umschaltung der Oszillatorspulen. Anders als in der Schrift '515 genügt für die absolute Positionsmessung ein einziger Messoszillator, oder alternativ zwei Messoszillatoren in Differenzschaltung (Anspruch 2 und Ansprüche 23 bis 25); dies hat den Vorteil, dass ein in sich nicht strukturiertes, relativ ausgedehntes und robustes, nur mit einer zweckmässigen Aussenkontur versehenes Messelement verwendbar ist, anstatt mehrere parallele, kleinteilig geeichte, binäre Kodespuren mittels einer Reihe von Oszillatoren abzutasten.

Die Oszillatoren der Erfindung arbeiten digital in dem Sinne, dass sie ein pulsförmiges, amplitudenbegrenztes Ausgangssignal mit einer positionsabhängigen Pulsfrequenz liefern. Dies hat den Vorteil, dass das Ausgangssignal ohne Analog/Digital-Wandler oder Demodulatoren unmittelbar digital weiterverarbeitet werden kann. Anders als in der Schrift '515 wird keine analoge Schwingungsamplitude als Maß für die Bedämpfung der Spule herangezogen. Anders als in der Schrift '879 liegen die Pulsfrequenzen eines Oszillators im Bereich von 25 bis 60 MHz und damit so hoch, dass sie in der Auswerteschaltung direkt (d.h. ohne einen zusätzlichen Taktoszillator) gezählt werden können.

Neben einem Oszillator mit einer Messspule enthält ein weiterer Oszillator nach dem Anspruch 1 auch eine Referenzspule, wodurch ein Referenzoszillator entsteht. Die Pulsfrequenz eines solchen Referenzoszillators hängt - anders als bei Messspulen und dem Messoszillator in der Schrift '879 - nicht vom Grad der Überdeckung der Spule durch das bewegliche Messelement ab, sondern erfasst getrennt von der Positionsmessung Störeinflüsse, die gleichartig auf die Messspule einwirken. Je nach der zu kompensierenden Störgröße bleibt die Referenzspule im gesamten Messbereich des beweglichen Messelements entweder vollständig bedeckt/bedämpft (Hochreferenzoszillator) oder vollständig unbedeckt/unbedämpft (Niedrigreferenzoszillator).

So lässt sich etwa die Temperaturabhängigkeit der Kennlinie "Pulsfrequenz als Funktion des Messwegs" durch eine einfache Rechenoperation kompensieren (Anspruch 3). Zu guten Ergebnissen führt eine Subtraktion der Pulsfrequenz des Mess-Oszillators und der Referenz-Pulsfrequenz des Niedrigreferenzoszillators. Im Unterschied zu der Schrift '515 ist kein Regelkreis zur Konstanthaltung des Referenzoszillators erforderlich und es muss die im Referenzoszillator gewonnene Regelgröße nicht in den Messoszillator eingespeist werden.

Ein zweiter Typ von Referenzoszillator, der in keiner der Schriften '879 und '515 vorgesehen ist, dient zum Ausgleich von mechanischen Toleranzen, welche die Abstandshöhe zwischen der Spulenanordnung (Ansprüche 8 bis 11) und dem plattenförmigen Messelement empfindlich beeinflussen. Vorzugsweise sind alle Spulen, jedenfalls die vom Messelement überdeckten Spulen, planar ausgebildet, d.h. als Flachspulen in die Leiterplatte geätzt. Statische Toleranzen, die vom Einbau der Messeinrichtung in das Getriebe herrühren, führen zu Abstandshöhen, die von Getriebe zu Getriebe zwischen 0,5 mm und 3 mm schwanken können. Hinzu kommen Toleranzen der Abstandshöhe, die während des Betriebs der Messeinrichtung auftreten. Sie rühren von Wärmedehnungen im Getriebe her und betragen weitere +/- 0,5 mm. Auch dynamische Störungen in Form von Vibrationen können den Abstand des Messelements von der Spulenanordnung verändern. Diese Störeinflüsse werden durch eine Referenzspule ausgeschaltet, die von dem beweglichen Messelement an jeder Stelle des Messbereichs vollständig überdeckt wird. Die hierdurch bewirkte maximale Bedämpfung durch die Wirbelströme führt zu einer minimalen Induktivität der Referenzspule und zu einer maximalen Pulsfrequenz des zugehörigen Referenzoszillators. Zur Kompensation des Störeinflusses würde auch in diesem Fall eine einfache Subtraktion der Referenz-Pulsfrequenz von der Pulsfrequenz des Messoszillators genügen (Anspruch 5). Noch günstiger ist allerdings die Möglichkeit, die Pulsfrequenzen der beiden Referenzspulen voneinander zu subtrahieren (Anspruch 6). Diese Differenz liefert einen unter den herrschenden Messbedingungen möglichen Maximalwert, der als Normierwert zur Anpassung einer geeigneten Messzeit herangezogen wird. Während der adaptiv bestimmten Messzeit werden sowohl die Pulsfrequenz des Messoszillators als auch die Pulsfrequenzen der beiden Referenzoszillatoren gezählt. Die hierfür geeignete Mess- und Referenzspulenanordnung für drei Oszillatoren wird besonders bevorzugt (Anspruch 7).

Die digitalen Signale aller Oszillatoren werden einer integrierten Auswerteschaltung zugeleitet, die als Gate Array (GA) ausgebildet ist oder die vom Anwender programmierbar sein kann (FPGA) oder die anwendungsspezifisch fest verschaltet sein kann (ASIC). Jede der angelieferten Pulsfrequenzen wird in einer Eingangsstufe in einem asynchronen Frequenzzähler gezählt. Start- und Stopsignale für die Zähler werden von einer Steuereinheit erzeugt. Die Messzeit, also die Differenz zwischen dem Start- und dem Stopsignal der asynchronen Zähler, wird der Steuereinheit durch die erwähnten Referenzmessungen vorgegeben.

Die Zählerstände der asynchronen Zähler werden, falls erforderlich, in Registern zwischengespeichert und dann verrechnet, insbesondere paarweise subtrahiert. Für jedes Frequenzpaar, dessen Signaldifferenz in der realisierten Ausführungsform der Erfindung von Interesse ist, ist in der Auswerteschaltung ein Subtrahierer vorgesehen.

Der synchrone Teil der Auswerteschaltung wird mit Hilfe einer Systemfrequenz intern getaktet. Anders als in der Schrift '879 ist kein gesonderter Taktgeber vorgesehen, sondern die Systemfrequenz wird aus der Pulsfrequenz des Oszillators mit der unbedeckten Referenzspule abgeleitet (Anspruch 4). Durch die Nutzung einer Oszillatorfrequenz als Systemtakt entfällt eine Temperaturkompensation für diejenigen Temperaturdriften, die innerhalb der Oszillatoren gleichartig auftreten. Ferner wird ein gesonderter Taktgeber als Bauteil für die Auswerteschaltung eingespart, wodurch bei der Verwendung eines ASIC-Chips die benötige Chipfläche reduziert wird.

Die Aufgabe der Erfindung wird auf besonders günstige Weise gelöst durch eine mit genau drei Oszillatoren ausgestattete induktive Positions- oder Winkelmesseinrichtung, deren wesentliche Merkmale im unabhängigen Anspruch 12 zusammengefasst sind. Der erste Oszillator enthält als Messoszillator die eingangs genannte Messspule, die partiell, entsprechend dem Messweg, von dem beweglichen Messelement überdeckt wird. Der zweite Oszillator enthält als Niedrigreferenzoszillator die unbedeckte Referenzspule, während der dritte Oszillator als Hochreferenzoszillator die vollständig überdeckte Referenzspule nutzt. Diese dreifache Spulenanordnung hat gegenüber einer Zweispulenanordnung den Vorteil, dass sie sämtliche Referenzwerte detektieren kann, die zur Kompensation eines Positionsmesswertes auch unter ungünstigen Betriebsbedingungen erforderlich sind. Gleichzeitig hat die dreifache Spulenanordnung im Vergleich zu einer Vier-Spulen-Anornung den Vorteil, dass der Platzbedarf auf der Messplatine geringer ist. Der mit einer vierten Spule (zweite Messspule) erzielbare Vorteil einer Linearisierung der Kennlinie kann auch durch eine einfachere Maßnahme erreicht werden, nämlich durch eine trapezförmige Aufweitung im Endbereich der rechteckigen Grundform der planaren Messspule (Anspruch 16). Die Spulen im Überdeckungsbereich des Messelements sind Planarspulen; die unbedeckte, etwas abseits liegende Referenzspule kann auch als diskretes dreidimensionales Bauelement in SMD-Bauweise aufgebaut sein (Ansprüche 13, 14 und 15).

Ein bevorzugter Aufbau eines digitalen Oszillators umfasst neben der Mess-oder Referenzspule zwei Kondensatoren in Colpitts-Schaltung, wobei ein rückgekoppelter Inverter mit Lastwiderstand die analoge LC-Schwingung in einen digitalen Pulszug umsetzt (Anspruch 17). Die Weiterverarbeitung erfolgt durch Zählung und Subtraktion der Pulsfrequenzen (Ansprüche 18 und 19), wobei die Systemfrequenz dieser digitalen Auswerteschaltung aus der Pulsfrequenz des Niedrigreferenzoszillators abgeleitet wird (Ansprüche 20, 21 und 22).

Der Vorteil der Doppelnutzung eines Oszillatorsignals als Messsignal und als Systemfrequenz der Auswerteschaltung kann auch in einer Messeinrichtung nach dem Anspruch 13 genutzt werden, die in einer relativ ungestörten Umgebung mit zwei Messoszillatoren auskommt. Der Betrieb der Auswerteschaltung wird hier mit einer Systemfrequenz getaktet, die aus der Pulsfrequenz eines der Messoszillatoren abgeleitet ist. Es stört die Schrittfolge in der Auswerteschaltung nicht, wenn die gemessene Frequenz -und damit auch die steuernde Systemfrequenz- den Veränderungen im Rahmen des Messbereichs unterworfen ist.

Die zwei Messspulen tauschen während des Messvorgangs ihre partielle Überdeckung aus (Anspruch 24) die Differenz ihrer Messsignale verdoppelt die Steilheit der Kennlinie (Anspruch 25), was in bekannter Weise für die Auflösung oder für den Messbereich oder für die Messdynamik genutzt werden kann.

Ausführungsbeispiele der Erfindung werden anhand von Figuren 1 bis 13 erläutert. Dabei zeigt:
- Figur 1: eine Zweispulenanordnung mit Messelement als Teil der Positionsmessvorrichtung;

- Figur 2: eine Vierspulenanordnung mit Messelement als Teil der Positionsmessvorrichtung;
- Figur 3: eine Dreispulenanordnung als Teil der Positionsmessvorrichtung;
- Figur 4: die Dreispulenanordnung nach Figur 3, bedämpft durch das bewegliche Messelement in zwei verschiedenen Positionen;
- Figur 5: eine Messspule mit rechteckiger Grundform und alternativ eine Messspule mit trapezförmiger Aufweitung;
- Figur 6: ein Diagramm der Kennlinie eines erfindungsgemäßen Messoszillators;
- Figur 7: ein Diagramm für die Frequenzzählung der Referenzoszillatoren unter verschiedenen Messbedingungen;
- Figur 8: ein elektrisches Blockschaltbild eines ersten Ausführungsbeispiels zur Ergebnisberechnung in der Auswerteschaltung;
- Figur 9: ein elektrisches Blockschaltbild des ersten Ausführungsbeispiels zur Normierwert- und Messzeitberechnung in der Auswerteschaltung;
- Figur 10: ein Zähldiagramm wie in Figur 7, zur Erläuterung einer zweiten Ausführungsform der Auswerteschaltung;
- Figur 11: ein elektrisches Blockschaltbild des zweiten Ausführungsbeispiels zur Ergebnisberechnung in der Auswerteschaltung;
- Figur 12: ein elektrisches Blockschaltbild des zweiten Ausführungsbeispiels zur Normierwert- und Messzeitberechnung in der Auswerteschaltung;

- Figur 13: ein Diagramm zur Ermittlung eines Divisionsfaktors, der in der zweiten Ausführungsform benötigt wird.

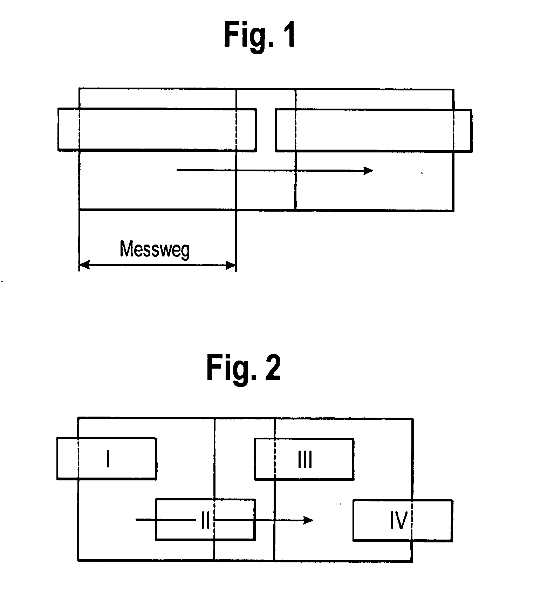

Figur 1 zeigt das Grundprinzip einer Messspule, die partiell von einem Wirbelstrom-Dämpfungselement überdeckt ist. Eine zweite Spule wird in diesem Fall ebenfalls als Messspule genutzt; ihre partielle Überdeckung ist gegenläufig zu der der ersten Messspule. Beide Spulen sind in bekannter Weise planar auf einer Leiterplatte aufgebracht; die Anschlussenden der Spulen-Leiterbahnen sind mit Kondensatoren und weiteren Schaltungsbestandteilen zu Oszillatoren verbunden. Für jede Spule kann eine Windung genügen; es können jedoch auch mehrere Windungen eine flache Spirale bilden.

Die zwei Flachspulen haben rechteckige Grundformen und sind in Messrichtung hintereinander angeordnet. In einer vorbestimmten Abstandshöhe über den Flachspulen ist das leitfähige Wirbelstrom-Dämpfungselement als bewegliches Messelement geführt. Nach einem alternativen Messprinzip könnte das Messelement auch aus einem weichmagnetischen Material wie Ferrit bestehen. Innerhalb eines Messbereiches, der von fast vollständiger Überdeckung einer Spule bis zur fast vollständigen Freigabe dieser Spule reicht, wird der Messweg zurückgelegt, dessen aktuelle Position zu bestimmen ist. Diese Zweispulenanordnung mit gegensinniger Wirkung eignet sich besonders für eine steilere Kennlinie der Messeinrichtung.

In Figur 2 ist die Zweispulenanordnung zu einer Vierspulenanordnung erweitert. Das bewegliche Messelement ist relativ länger als in Figur 1; es kann hier zwei benachbarte Flachspulen überdecken. Wenn sich das bewegliche Messelement in der linken Hälfte des Messbereichs aufhält, so übernehmen die oberen Spulen I und III die Funktion als Messspulen, so wie in Figur 1. Von den unteren Spulen ist II vollständig überdeckt und IV vollständig unbedeckt. Ihre Signale können in der Auswerteschaltung als Referenzsignale benutzt werden. Die permanent bedämpfte Spule II gehört zu einem Hochreferenzoszillator, dessen Signal ein Maß für die Abstandshöhe des beweglichen Messelements über der gesamten Spulenanordnung ist. Die permanent unbedämpfte Spule IV gehört zu einem Niedrigreferenzoszillator, dessen Signal ein Maß für die Umgebungstemperatur und für andere Störgrößen wie z.B. die Bauteilealterung ist.

Wenn sich das bewegliche Messelement im rechten Teil des Messbereichs befindet, so kehren sich die Funktionen um. Die unteren Spulen II und IV sind nun nach Art von Messspulen partiell und gegenläufig überdeckt, während die oberen Spulen I und III jetzt als Referenzspulen benützt werden können. Diese Spulenanordnung ist dann geeignet, wenn genügend Platz für die Messeinrichtung zur Verfügung steht und wenn die Messung besonders genau und besonders störungsfrei erfolgen soll.

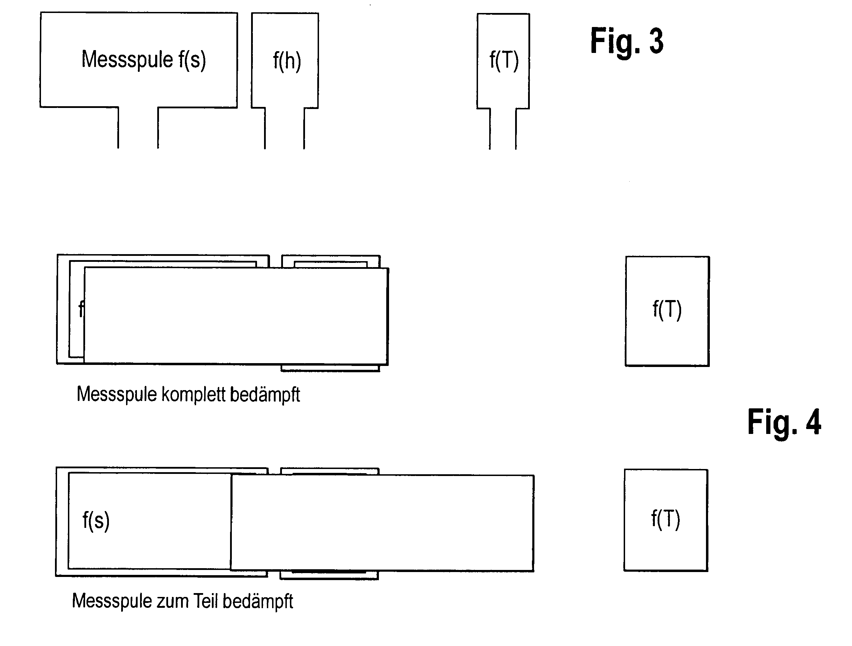

Die Figur 3 zeigt eine weitere bevorzugte Möglichkeit der Spulenanordnung mit einer Messspule, einer Hochreferenzspule und einer Niedrigreferenzspule. Die Figur 4 zeigt das dazugehörige Messelement in zwei verschiedenen Positionen des Messbereichs. Die Messspule ist abhängig vom Grad der Überdeckung bedämpft, so dass ihr Signal in erster Linie eine Funktion der Position s ist. In dieses Messsignal gehen aber auch die Störungen ein, die von einer unstabilen Abstandshöhe h und von einer wechselnden Betriebstemperatur T herrühren. Um Signale zur Kompensation dieser Störungen zu gewinnen, eignen sich die nahe bei der Messspule liegende Hochreferenzspule f(h) und die entfernt von der Messspule liegende Niedrigreferenzspule f(T).

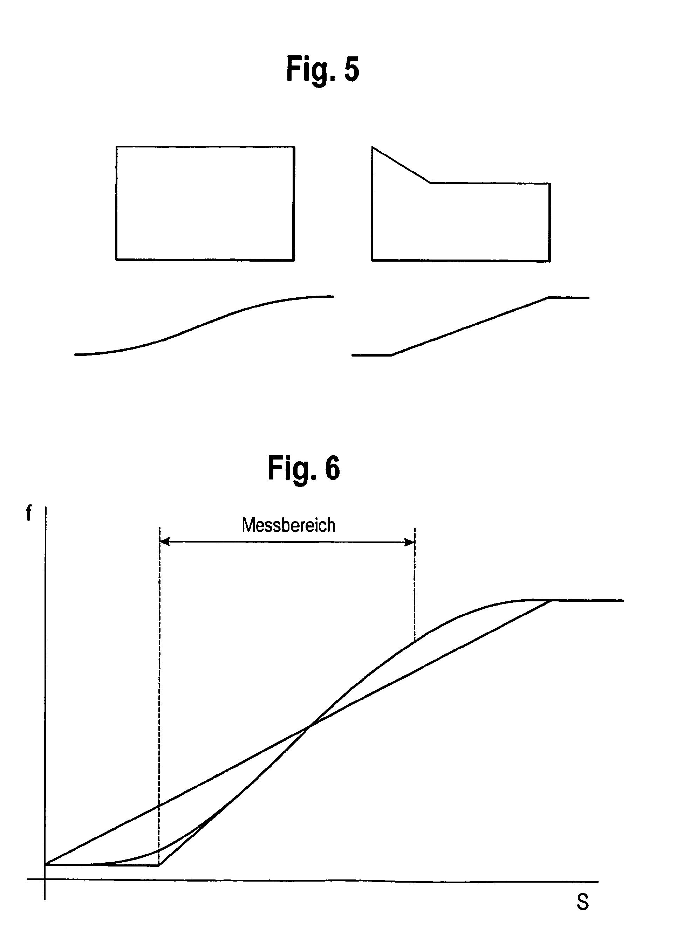

Die Figur 5 zeigt eine Möglichkeit, die rechteckige Grundform der Messspule zu verändern und dadurch die Kennlinie zu verbessern. Die symbolische Darstellung der Kennlinien (ebenfalls in Figur 5) ist in Figur 6 genauer dargestellt. Das Kennliniendiagramm zeigt auf der Abszisse die Position s des beweglichen Messelements und auf der Ordinate die Pulsfrequenz f des digitalen Oszillators, der die partiell überdeckte Messspule enthält. Grundsätzlich nimmt die Oszillatorfrequenz mit zunehmender Überdeckung der Messspule durch das Messelement zu. Als Messbereich nutzbar ist jedoch nur ein Teil des Übergangsbereiches mit etwa linearer Kennlinie. Um diesen Messbereich möglichst breit zu machen und auch um die Linearität innerhalb des Messbereiches zu verbessern, eignet sich die in Figur 5 dargestellte Modifikation der rechteckigen Grundform der Messspule. Durch die trapezförmige Aufweitung des Grundrisses am linksseitigen Ende des Messbereiches lässt sich die Krümmung am Ende der Kennlinie zu einem Knick ausprägen.

Die für den Anwendungszweck ausgewählte Spulenanordnung wird zusammen mit den übrigen Oszillatorbaugruppen und der digitalen Auswerteschaltung auf einer Leiterplatte angeordnet. Die gesamte Leiterplattenanordnung wird in ein Aluminiumgehäuse eingesetzt und vergossen. Die so montierte Messeinrichtung hat eine kompakte Form ohne bewegliche Teil. Das bewegliche Messelement ist nach Form und Material einfach zu definieren, so dass es in einem ganz anderen Herstellungsprozess (beispielsweise als Fahne, die beim Guss einer Schaltschwinge angegossen ist) produziert werden kann und dennoch sicher und störungsfrei mit der vergossenen Leiterplattenanordnung zusammenarbeiten kann.

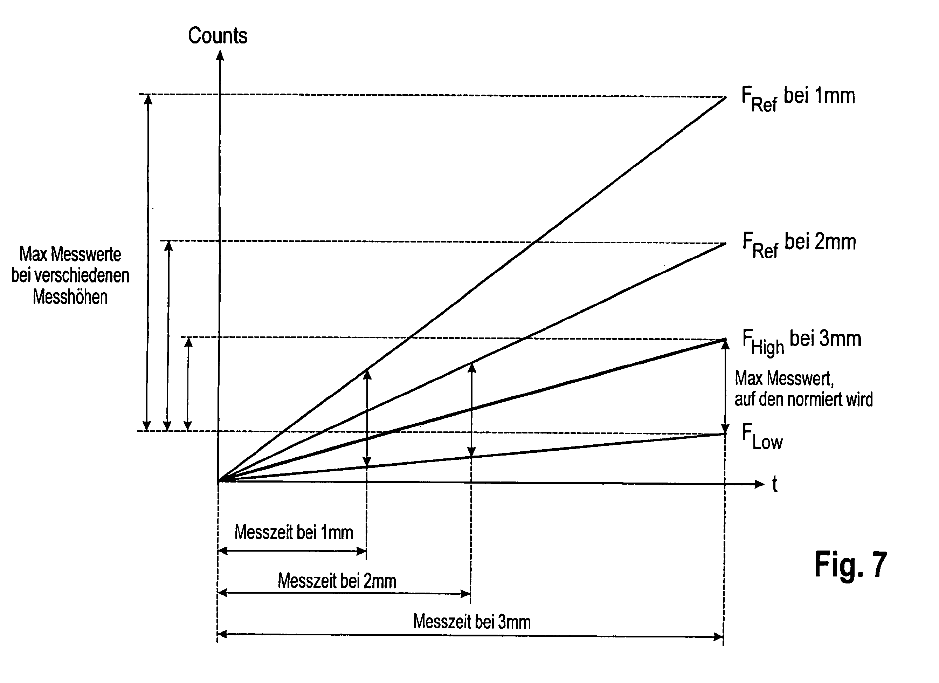

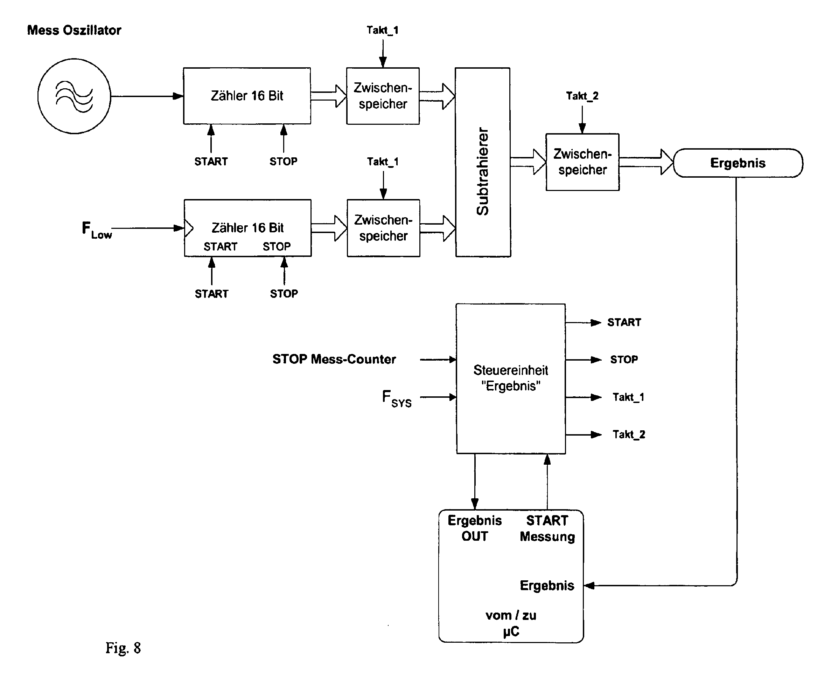

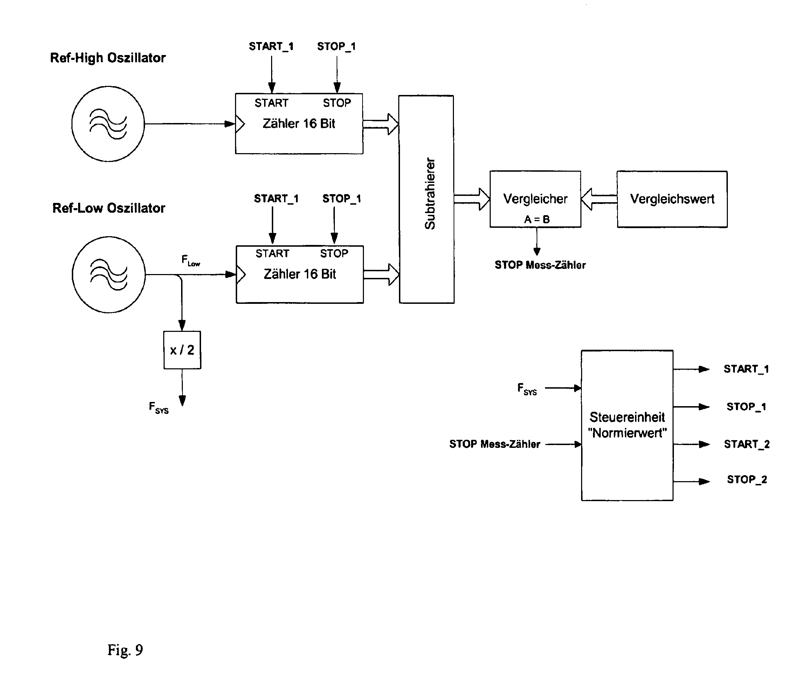

Die Blockschaltbilder gemäß Figur 8 und 9 zeigen, wie die Signale der Oszillatoren in die Auswerteschaltung eingespeist werden. Jedes Oszillatorsignal wird in der Eingangsstufe einem Frequenzzähler zugeführt, der während einer bestimmten Messzeit die Impulse zählt. Dem Diagramm in Figur 7 ist entnehmen, wie die Zählerstände der beiden Referenzoszillatoren während der Messzeit hochlaufen. Am langsamsten steigt der Zählerstand F_{low} des unbedämpften Niedrigreferenzoszillators. Der Anstieg des Hochreferenzoszillators erfolgt schneller wegen dessen vollständiger Überdeckung. Eine Abstandshöhe von 3 mm wird als Normalfall definiert, der die notwendige Positionsauflösung garantiert. Für diese Messbedingung wird ein maximaler Messwert vorgegeben, auf den alle nachfolgenden Zählwerte normiert werden. Der maximale Messwert ist die Differenz zwischen den Zählerständen des Hochreferenzoszillators und des Niedrigreferenzoszillators, die während der Messzeit aufläuft. Der Zählerstand der partiell überdeckten Messspule liegt zwischen diesen beiden Grenzwerten.

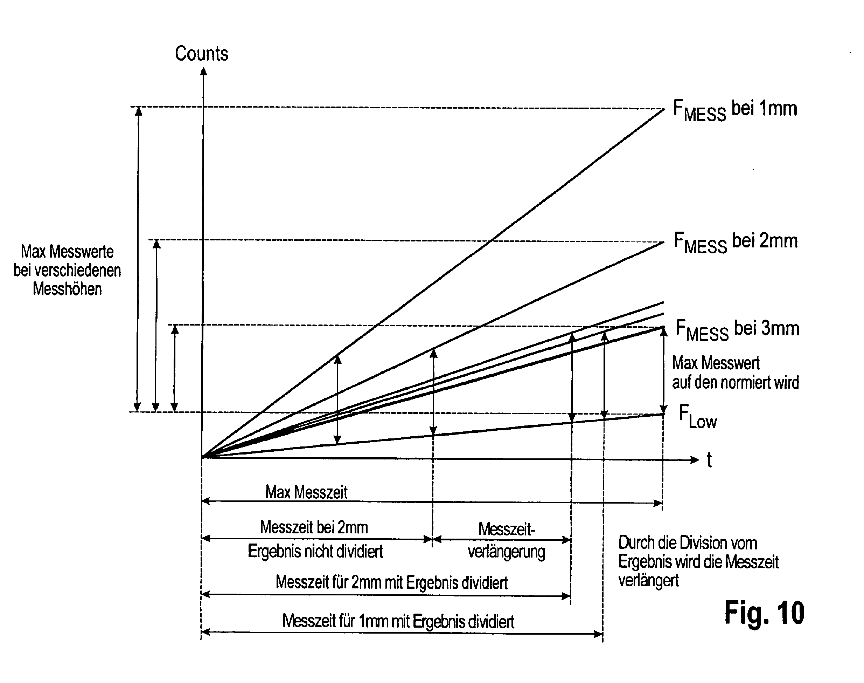

Aufgrund der oben diskutierten Störeinflüsse kann sich die Abstandshöhe von dem Wert 3 mm auf beispielsweise 2 mm oder 1 mm verringern. Unter diesen Messbedingungen steigen die Zählerstände des Hochreferenzoszillators schneller an. Da die Auswerteschaltung den maximalen Messwert, auf den normiert wird, beibehält, verkürzt sich unter diesen Messbedingungen die Messzeit. Im ersten Ausführungsbeispiel der Auswerteschaltung (Figuren 8 und 9) wird beispielsweise anlässlich der Kalibrierung der Messeinrichtung und auch fortlaufend während der Messung festgestellt, dass die Abstandshöhe und damit die Messzeit in der Nähe des festgelegten Normbereichs liegen. Damit genügt als Auswerteschaltung das Ausführungsbeispiel nach den Figuren 8 und 9. Anhand der Figuren 10 bis 13 wird später ein zweites Ausführungsbeispiel diskutiert, das bei anderen, von der Norm abweichenden Messbedingungen zu einer Ergebnisdivision führt.

In Figur 8 werden die Signale des Messoszillators und des Niedrigreferenzoszillators zu dem Positionsmessergebnis verarbeitet. In der Eingangsstufe werden die Pulsfrequenzen gezählt. Hierzu liefert die Steuereinheit "Ergebnis" Start- und Stopsignale für die Zähler, wozu sie eine allgemeine Systemfrequenz F_{sys} und eine Information über die Messzeit benötigt, die beide aus der Schaltung gemäß Figur 9 hergeleitet werden. Der asynchrone Zähler für den Niedrigreferenzoszillator läuft gemäß Figur 7 in der maximalen Messzeit hoch und liefert einen Bezugswert, der die Umgebungstemperatur widerspiegelt. Das Signal des Messoszillators enthält im Zählerstand seines asynchronen Zählers zusätzlich den Einfluss der partiellen Überdeckung durch das Messelement. Der Subtrahierer gemäß Figur 8 liefert einen temperaturunabhängigen Differenzwert. Zur Nacheichung oder Anpassung der Messzeit wird derjenige Teil der Auswerteschaltung benützt, der in Figur 9 dargestellt ist. Aus der Frequenz F_{low} des Niedrigreferenzoszillators wird die Systemfrequenz F_{sys} abgeleitet, mit der die Steuereinheit "Normierwert" (Figur 9) und die Steuereinheit "Ergebnis" (Figur 8) getaktet werden. Ein gesonderter Taktoszillator ist nicht erforderlich. Als Systemfrequenz F_{sys} kann die Pulsfrequenz des Niedrigreferenoszillators direkt verwendet werden oder es kann auch ein Frequenzteiler zwischengeschaltet werden. In Figur 9 wird die niedrigste der Oszillatorfrequenzen durch zwei geteilt, um den Systemtakt zu erzeugen.

Die asynchronen Zähler in der Eingangsstufe und der Subtrahierer sind in Fig. 9 vergleichbar mit Figur 8, jedoch liefert statt des Messoszillators der Hochreferenzoszillator den maximal möglichen Zählwert (vgl. Figur 7). Wenn diese Differenz einen vorgegebenen Maximalwert erreicht, liefert ein Vergleicher eine Information über die Messzeit (Stop Mess Counter). Diese Messzeitinformation wird von den Steuereinheiten in Figur 8 und Figur 9 benötigt, um die Start- und Stopsignale für die Zähler und die Übernahmesignale für die Speicher vor und hinter dem Subtrahierer zu ermitteln.

Die Auswerteschaltung gemäß Figur 8 und 9 kann als Gate Array (GA), als Field Programmable Gate Array (FPGA) oder als Application Specific Integrated Circuit (ASIC) realisiert werden.

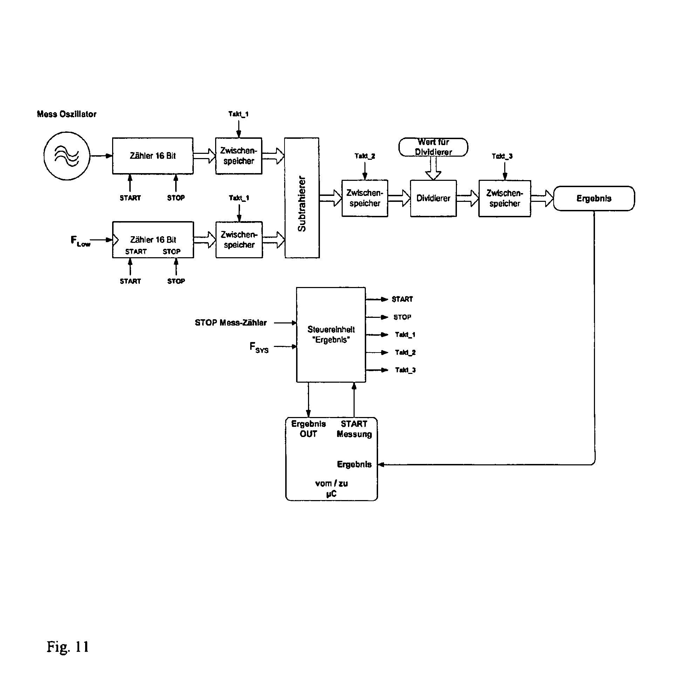

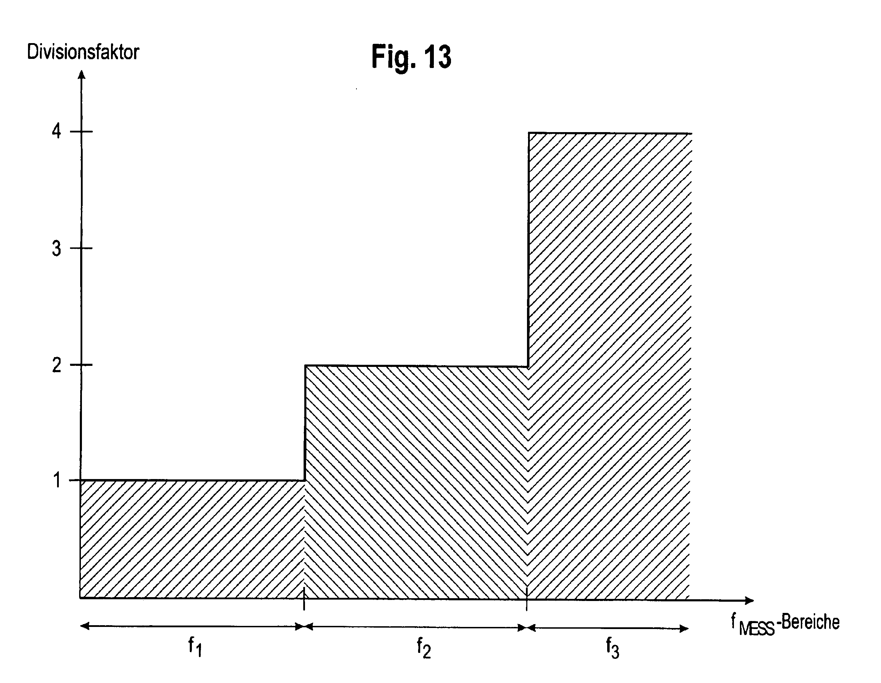

In Figur 10 ist eine Variante der Messzeitberechnung dargestellt, die dann angewandt wird, wenn aufgrund von mechanischen Toleranzen die Abstandshöhe auf 2 mm oder 1 mm verringert sein sollte. In diesem Fall würden die Zählerstände über den festgelegten Maximalwert ansteigen. Diesem Umstand wird in einem zweiten Ausführungsbeispiel der Auswerteschaltung durch eine Ergebnisdivision Rechnung getragen. Damit die in der quasi verlängerten Messzeit erzielten Zählerstände vergleichbar bleiben und den festgelegten Normierwert nicht überschreiten, wird die Auswertung gemäß Figur 11 durch eine Division des Subtraktionsergebnisses ergänzt. Für hohe Frequenzen in einem Frequenzbereich f3 wird der Divisionsfaktor 4 benützt (siehe Figur 13), für weniger erhöhte Frequenzen in einem Frequenzbereich f2 wird der Divisionsfaktor 2 in den Rechenweg eingespeist (siehe ebenfalls Figur 13). In dem als Norm herangezogenen Frequenzbereich f1 gilt der Divisionsfaktor 1, d.h. es wird die bereits anhand der Figur 8 erläuterte Berechnung vorgenommen.

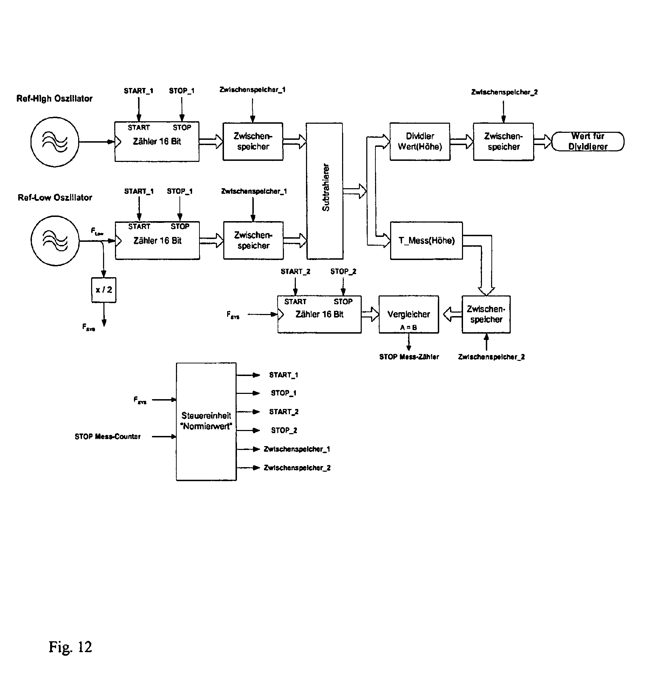

Die Berechnung der Messzeit ist in dem zweiten Ausführungsbeispiel komplizierter (vgl. Figur 12). Die Berechnung der Differenz zwischen dem Hochreferenzoszillator und dem Niedrigreferenzoszillator überschreitet in diesem Fall den Frequenzbereich f1 von Figur 13 und führt zu zweierlei. Erstens wird aus dieser Differenz der Wert des Divisors ermittelt, der in Figur 11 für den zusätzlichen Divisionsvorgang benötigt wird. Zweitens wird in einer speziellen Berechnung eine die Messzeitinformation ermittelt, die den Steuereinheiten "Normierwert" und "Ergebnis" zugeführt wird.

## Patentansprüche

1. Induktive Positions- oder Winkelmesseinrichtung
mit zwei oder mehr digitalen Oszillatoren, die mindestens eine Messspule und mindestens eine Referenzspule enthalten,
wobei eine Messspule aufgrund von Induktivitätsänderungen, die durch ein bewegliches Messelement abhängig vom Grad der Überdeckung der Messspule durch das Messelement erzeugt werden, eine Pulsfrequenz des zugehörigen Oszillators verändert,
während die Referenzspule entweder vollständig überdeckt oder vollständig unbedeckt ist von dem beweglichen Messelement, so dass die Pulsfrequenz des zugehörigen Oszillators nicht vom Grad der Überdeckung abhängt,
und mit einer digitalen Auswerteschaltung, in der die Pulsfrequenzen gezählt und paarweise verrechnet werden,
wobei der Betrieb der Auswerteschaltung mithilfe einer Systemfrequenz getaktet wird, die aus der Pulsfrequenz eines der Oszillatoren abgeleitet ist.

2. Induktive Positions- oder Winkelmesseinrichtung nach Anspruch 1,
**dadurch gekennzeichnet, dass**
zwei Messspulen in Bewegungsrichtung des Messelementes hintereinander so angeordnet sind, dass die teilweise Überdeckung der einen Messspule zunimmt, wenn die teilweise Überdeckung der anderen Messspule abnimmt, so dass die auszuwertenden Pulsfrequenzen sich gegenläufig ändern.

3. Induktive Positions- oder Winkelmesseinrichtung nach Anspruch 1,
**dadurch gekennzeichnet, dass**
die Pulsfrequenzen einer Messspule und einer unbedeckten Referenzspule verrechnet, insbesondere subtrahiert werden zu einem Messergebnis, in welchem frequenzbeeinflussende Parameter wie z.B. Umgebungstemperatur und Bauteilealterung kompensiert sind.

4. Induktive Positions- oder Winkelmesseinrichtung nach Anspruch 3,
**dadurch gekennzeichnet, dass**
die Systemfrequenz aus der Pulsfrequenz des Oszillators mit der unbedeckten Referenzspule abgeleitet ist.

5. Induktive Positions- oder Winkelmesseinrichtung nach Anspruch 1,
**dadurch gekennzeichnet, dass**
die Pulsfrequenzen einer Messspule und einer vollständig bedeckten Referenzspule verrechnet, insbesondere subtrahiert werden zu einem Messergebnis, in welchem unerwünschte Änderungen der Abstandshöhe der Spulen von dem Messelement kompensiert sind.

6. Induktive Positions- oder Winkelmesseinrichtung nach Anspruch 1,
**dadurch gekennzeichnet, dass**
die Pulsfrequenzen einer unbedeckten Referenzspule und einer vollständig bedeckten Referenzspule verrechnet werden zu einem maximalen Messergebnis, das als Normierwert zur Anpassung einer Messzeit für die Zählung der Pulsfrequenzen der Oszillatoren herangezogen wird.

7. Induktive Positions- und Winkelmesseinrichtung nach Anspruch 1, mit drei digitalen Oszillatoren, die eine Messspule, eine unbedeckte Referenzspule und eine vollständig überdeckte Referenzspule enthalten.

8. Induktive Positions- oder Winkelmesseinrichtung nach Anspruch 7,
**dadurch gekennzeichnet, dass**
die drei Spulen planar auf einer Leiterplatte angeordnet sind.

9. Induktive Positions- oder Winkelmesseinrichtung nach Anspruch 7,
**dadurch gekennzeichnet, dass**
zumindest eine der drei Spulen als diskretes Bauelement auf der Leiterplatte montiert, insbesondere in SMD-Bauweise verlötet ist.

10. Induktive Positions- oder Winkelmesseinrichtung nach Anspruch 9,
**dadurch gekennzeichnet, dass** zwei Spulen planar auf die Leiterplatte geätzt sind.

11. Induktive Positions- oder Winkelmesseinrichtung nach Anspruch 8,
**dadurch gekennzeichnet, dass**
die planare Messspule eine rechteckige Grundform aufweist, die in einem partiell überdeckten Endbereich aufgeweitet, insbesondere trapezförmig aufgeweitet ist.

12. Induktive Positions- oder Winkelmesseinrichtung mit drei digitalen Oszillatoren, **dadurch gekennzeichnet, dass**
der erste Oszillator als Messoszillator eine Messspule enthält, die aufgrund von Induktivitätsänderungen, die durch ein bewegliches Messelement abhängig vom Grad der Überdeckung zwischen der Messspule und dem Messelement erzeugt werden, eine Pulsfrequenz des Messoszillators verändert,
der zweite Oszillator als Niedrigreferenzoszillator eine von dem beweglichen Messelement unbedeckte Referenzspule enthält, so dass eine Pulsfrequenz des Niedrigreferenzoszillators zur Kompensation von frequenzbeeinflussenden Parametern wie z.B. Umgebungstemperatur und Bauteilealterung dient,
und der dritte Oszillator als Hochreferenzoszillator eine von dem beweglichen Element vollständig überdeckte Referenzspule enthält, so dass eine Pulsfrequenz des Hochreferenzoszillators zur Kompensation von unerwünschten Änderungen der Abstandshöhe der Spulen von dem Messelement dient.

13. Induktive Positions- oder Winkelmessvorrichtung nach Anspruch 12,
**dadurch gekennzeichnet, dass**
die Messspule, die unbedeckte Referenzspule und die bedeckte Referenzspule planar auf einer Leiterplatte angeordnet sind.

14. Induktive Positions- oder Winkelmesseinrichtung nach Anspruch 13,
**dadurch gekennzeichnet, dass**
zumindest eine der drei Spulen als diskretes Bauelement auf der Leiterplatte montiert, insbesondere in SMD-Bauweise gelötet ist.

15. Induktive Positions- oder Winkelmesseinrichtung nach Anspruch 14,
**dadurch gekennzeichnet, dass** zwei Spulen planar auf die Leiterplatte geätzt sind.

16. Induktive Positions- oder Winkelmesseinrichtung nach Anspruch 13,
**dadurch gekennzeichnet, dass**
die planare Messspule eine rechteckige Grundform aufweist, die in einem partiell überdeckten Endbereich aufgeweitet, insbesondere trapezförmig aufgeweitet ist.

17. Induktive Positions- oder Winkelmesseinrichtung nach einem der Ansprüche 12 bis 16, **dadurch gekennzeichnet, dass**
jeder digitale Oszillator neben der Mess- oder Referenzspule zwei frequenzbestimmende Kondensatoren, einen Widerstand und einen Inverter umfasst.

18. Induktive Positions- und Winkelmesseinrichtung nach einem der Ansprüche 12 bis 17, **dadurch gekennzeichnet, dass**
die Ausgangssignale der digitalen Oszillatoren in einer digitalen Auswerteschaltung verarbeitet werden, in der die Pulsfrequenzen gezählt und paarweise verrechnet werden.

19. Induktive Positions- oder Winkelmesseinrichtung nach Anspruch 18,
**dadurch gekennzeichnet, dass**
die Pulsfrequenzen der digitalen Oszillatoren in asynchronen Zählern gezählt werden.

20. Induktive Positions- oder Winkelmesseinrichtung nach Anspruch 19,
**dadurch gekennzeichnet, dass**
der Betrieb eines synchronen Teils der Auswerteschaltung mit Hilfe einer Systemfrequenz getaktet wird, die direkt oder mittels eines digitalen Teilers aus der Pulsfrequenz eines der Oszillatoren abgeleitet ist.

21. Induktive Positions- oder Winkelmesseinrichtung nach Anspruch 20,
**dadurch gekennzeichnet, dass**
die Systemfrequenz aus der Pulsfrequenz des Niedrigreferenzoszillators mit der unbedeckten Referenzspule abgeleitet ist.

22. Induktive Positions- oder Winkelmesseinrichtung nach Anspruch 21,
**dadurch gekennzeichnet, dass**
die Pulsfrequenz des Niedrigreferenzoszillators in einem Frequenzteiler durch einen Faktor geteilt wird, bevor sie als Systemfrequenz der Auswerteschaltung zugeführt wird.

23. Induktive Positions- oder Winkelmesseinrichtung
mit zwei digitalen Oszillatoren, die zwei Messspulen enthalten,
wobei jede Messspule aufgrund von Induktivitätsänderungen, die durch ein bewegliches Messelement abhängig vom Grad der Überdeckung der Messspule durch das Messelement erzeugt werden, eine Pulsfrequenz des zugehörigen Oszillators verändert,
und mit einer digitalen Auswerteschaltung, in der die Pulsfrequenzen gezählt und verrechnet werden,
wobei der Betrieb der Auswerteschaltung mithilfe einer Systemfrequenz getaktet wird, die aus der Pulsfrequenz eines der Oszillatoren abgeleitet ist.

24. Induktive Positions- oder Winkelmesseinrichtung nach Anspruch 23,
**dadurch gekennzeichnet, dass**
die zwei Messspulen in Bewegungsrichtung des Messelementes hintereinander so angeordnet sind, dass die teilweise Überdeckung der einen Messspule zunimmt, wenn die teilweise Überdeckung der anderen Messspule abnimmt, so dass die auszuwertenden Pulsfrequenzen sich gegenläufig ändern.

25. Induktive Positions- oder Winkelmesseinrichtung nach Anspruch 23 oder 24, **dadurch gekennzeichnet, dass**
die Pulsfrequenzen subtrahiert werden.

## Geänderte Patentansprüche

### Geänderte Patentansprüche gemäss Regel 137(2) EPÜ.

**1.** Induktive Positions- oder Winkelmesseinrichtung
mit zwei oder mehr digitalen Oszillatoren, die mindestens eine Messspule (I, II, III, IV) enthalten,
so dass ein erster Oszillator als Messoszillator eine Messspule (I, II, III, IV) enthält, die aufgrund von Induktivitätsänderungen, die durch ein bewegliches Messelement abhängig vom Grad der Überdeckung zwischen der Messspule und dem Messelement erzeugt werden, eine Pulsfrequenz (f als Funktion von s; F Mess) des Messoszillators verändert,
und so dass ein zweiter Oszillator als Mess- oder Referenzoszillator eine Mess- oder Referenzspule (I, II, III, IV) enthält, wobei eine Referenzspule **dadurch** definiert ist, dass sie entweder vollständig überdeckt oder vollständig unbedeckt ist von dem beweglichen Messelement, so dass die Pulsfrequenz (f als Funktion von h; f als Funktion von T) des zugehörigen Referenzoszillators (Ref-High; Ref-Low) nicht vom Grad der Überdeckung abhängt,
und mit einer digitalen Auswerteschaltung, in der die Pulsfrequenzen (f; F) gezählt und verrechnet werden.

**2.** Induktive Positions- oder Winkelmesseinrichtung nach Anspruch 1, **dadurch gekennzeichnet, dass** der Betrieb der Auswerteschaltung mit Hilfe einer Systemfrequenz (F Sys) getaktet wird, die aus der Pulsfrequenz (F Low) eines der Oszillatoren abgeleitet ist.

**3.** Induktive Positions- oder Winkelmesseinrichtung nach Anspruch 1 oder 2, **dadurch gekennzeichnet, dass** die in der digitalen Auswerteschaltung gezählten Pulsfrequenzen (F Mess, F Ref, F High, F Low) paarweise verrechnet werden.

**4.** Induktive Positions- oder Winkelmesseinrichtung nach Anspruch 1 bis 3, **gekennzeichnet durch** mindestens eine Referenzspule (I, II, III, IV).

**5.** Induktive Positions- oder Winkelmesseinrichtung nach Anspruch 4, **dadurch gekennzeichnet, dass** ein zweiter Oszillator als Niedrigreferenzoszillator (Ref Low) eine von dem beweglichen Messelement unbedeckte Referenzspule (I, II, III, IV) enthält, so dass eine Pulsfrequenz (f als Funktion von T; F Low) des Niedrigreferenzoszillators (Ref Low) zur Kompensation von frequenzbeeinflussenden Parametern wie z.B. Umgebungstemperatur (T) und Bauteilealterung dient.

**6.** Induktive Positions- oder Winkelmesseinrichtung nach Anspruch 4, **dadurch gekennzeichnet, dass** ein zweiter Oszillator als Hochreferenzoszillator (Ref High) eine von dem beweglichen Element vollständig überdeckte Referenzspule (I, II, III, IV) enthält, so dass eine Pulsfrequenz (f als Funktion von h; F High) des Hochreferenzoszillators (Ref High) zur Kompensation von unerwünschten Änderungen der Abstandshöhe (h) der Spulen (I, II, III, IV) von dem Messelement dient.

**7.** Induktive Positions- oder Winkelmesseinrichtung nach Anspruch 4, **dadurch gekennzeichnet, dass**
ein zweiter Oszillator als Niedrigreferenzoszillator (Ref Low) eine von dem beweglichen Messelement unbedeckte Referenzspule (I, II, III, IV) enthält, so dass eine Pulsfrequenz (f als Funktion von T; F Low) des Niedrigreferenzoszillators (Ref Low) zur Kompensation von frequenzbeeinflussenden Parametern wie z.B. Umgebungstemperatur (T) und Bauteilealterung dient,
und dass ein dritter Oszillator als Hochreferenzoszillator (Ref High) eine von dem beweglichen Element vollständig überdeckte Referenzspule (I, II, III, IV) enthält, so dass eine Pulsfrequenz (f als Funktion von h; F High) des Hochreferenzoszillators (Ref High) zur Kompensation von unerwünschten Änderungen der Abstandshöhe (h) der Spulen (I, II, III, IV) von dem Messelement dient.
